Europäisches Patentamt

European Patent Office

Office européen des brevets

(19)

(11) Publication number: 0 315 443
A1

## (12) EUROPEAN PATENT APPLICATION

(21) Application number: 88310333.5

(22) Date of filing: 03.11.88

(51) Int. Cl.⁴: F 16 D 65/853
F 16 D 55/14

(30) Priority: 05.11.87 GB 8725908

(43) Date of publication of application:
10.05.89 Bulletin 89/19

(84) Designated Contracting States: DE GB IT

(71) Applicant: LUCAS INDUSTRIES public limited company
Great King Street
Birmingham, B19 2XF West Midlands (GB)

(72) Inventor: Price, Anthony George
14 Meadow Lane Croesyceiliog
Cwmbran Gwent NP44 2EY Wales (GB)

Campbell, Roy
The Corner House 1 Marlbrook Lane Licky Rock
Bromsgrove Worcestershire (GB)

Green, Andrew Peter
22 Park View Pontnewydd
Cwmbran Gwent Wales (GB)

(74) Representative: Spall, Christopher John et al
BARKER, BRETTELL & DUNCAN 138 Hagley Road
Edgbaston Birmingham B16 9PW (GB)

(54) Improvements in vehicle disc brakes of the liquid cooled type.

(57) In a disc brake with only a small reservoir of cooling liquid
(20) it is desirable to pump the coolant onto the braking
surfaces to maximise the efficiency of the coolant. Flow control
means (28, 105) responsive to braking induced torque
transmitted to the pressure plate (7) only allows coolant to be
pumped during braking. The flow control means (28, 101) is
provided in a projecting lug (17) of the pressure plate (7) and
co-operates with an adjacent corresponding lug (19) on the
housing (3) with which it is urged into engagement during
braking. The flow control means can be a valve (28) in a cooling
liquid supply line (21) between the reservoir (20) and the pump
(P) which isolates the pump from the reservoir when no braking
occurs, or it can be a switch (101) which only activates the
pump during braking. A temperature sensitive flow valve (35),
such as a bi-metallic strip (39) could also be incorporated.

FIG.2.

EP 0 315 443 A1

Description

## IMPROVEMENTS IN VEHICLE DISC BRAKES OF THE LIQUID COOLED TYPE

This invention relates to improvements in vehicle disc brakes of the liquid-cooled type, of the kind in which is provided at least one rotatable friction braking member slidably keyed to a shaft to be braked and rotatable in a housing, a surface which is relatively stationary with respect to the rotatable friction braking member during braking, actuation means for bringing the surface and the rotatable friction braking member into engagement to apply the brake, and means for supplying cooling liquid to cool the brake.

Brakes of the kind set forth are commonly used in tractors or the like vehicles, and the cooling liquid usually comprises oil from the gearbox. In order to minimise parasitic drag, particularly when the oil is cool, and conserve consequent power, it is usual for the oil in the gearbox to be maintained substantially at the minimum level only necessary to provide adequate lubrication. This, in turn, creates the problem that such a minimum level represents a volume or depth of oil adjacent to the brake which is normally inadequate to achieve a degree of cooling of the braking member necessary to sustain a minimum wear life for the lining.

It is known to pump cooling liquid from a relatively small reservoir of oil to the braking faces of a rotatable friction braking member and the stationary braking surface to maximise the effectiveness of the cooling liquid which is present. It is also known to allow the pump only to operate during braking.

European Patent Application publication No. 0 143 898 discloses a clutch in which the flow of cooling liquid to the friction surfaces of the clutch is prevented until the clutch is actuated by a hydraulic piston. When the clutch is not causing friction heat to be generated the cooling liquid is drained from the housing containing the friction members. In one embodiment the increasing hydraulic pressure generated in the actuator during braking opens a valve to allow cooling liquid to flow. In other embodiments the axial movement of the pressure plate allows a spring-urged ball valve to open and so allow flow of cooling liquid. No flow is possible until the clutch is actuated and the piston moves axially.

United States Patent No. 3 071 210 discloses a vehicle brake which has a coolant pump which is actuated during braking. The pump relies upon relative rotation between ring gear splined to rotate with the wheel to be braked and a pump casing and cover plate of the pump to drive planetary gears which actually cause pumping of coolant. The necessary relative rotation is caused by urging the cover plate axially into engagement with a braking surface to retard the cover plate. The cover plate is axially aligned with a pack of interposed rotating friction discs and stationary plates so that the cover plate is urged against the braking surface by the pack during brake actuation. A temperature sensitive device maintains an axial force on the cover plate, and so maintains the pump in operation, when the coolant is hotter than a pre-determined temperature, irrespective of whether the brake is actuated or not.

According to a first aspect of the invention a vehicle disc brake of the liquid cooled type comprises a first braking surface provided on a rotatable friction braking member rotatable in a housing and slidably keyed to a shaft to be braked, a torque-taking member having a second braking surface provided in the housing, actuator means for bringing the first and second braking surfaces into frictional engagement to apply the brake, means for supplying cooling liquid to the braking surfaces to cool the braking surfaces, torque being applied to the second braking surface by the first braking surface during braking due to relative rotation of the first and second braking surfaces, and flow control means is provided to control the supply of cooling liquid to the brake, characterised in that a control portion of the flow control means is responsive to a circumferential torque-induced force generated between the torque-taking member and a torque abutment provided in the housing, the control portion being urged relative to the torque abutment during braking by torque applied to the second braking surface by the first braking surface, and the flow control means being arranged such that the supply of cooling liquid to the braking surfaces is significantly greater when braking generated torque is exerted on the torque-taking member than when no such braking generated torque is present.

Preferably the torque-taking member is provided with a projecting lug and the housing is provided with a complementary lug, the flow control means being provided in one of the lugs and being responsive to relative angular movement between the lugs induced by braking generated torque on the torque-taking member. Preferably the two lugs move relatively together during braking.

Preferably the actuator means comprises an axially movable pressure plate for urging the first and second braking surfaces into engagement.

The pressure plate may comprise the torque-taking member. The brake then preferably also comprises a third braking face provided on the opposite axially spaced side of the rotatable friction member to the first braking surface, and a fourth relatively stationary braking surface provided in the housing. The fourth braking surface may be provided on a relatively stationary member that is keyed to the housing so as to be non-rotatable, but axially slidable. The second braking surface is then preferably provided on the pressure plate, although it could be one and the same surface as the fourth braking surface. Alternatively, the first braking surface could be part of the housing and the second, torque responsive, braking surface would then be provided on the pressure plate.

A pressure plate having flow control means provided at a radial lug is seen as a second aspect of the invention.

The brake may comprise a series of axially spaced rotatable friction discs each with a braking surface on each of its faces, and an interleaved series of stationary members, such a brake being known as a multi-plate brake.

The flow control means may comprise an electrical switch provided in the lug of the torque-taking member or the corresponding lug of the housing, the switch controlling the operation of a pump provided to pump cooling liquid to cool the brake.

The pump may be integral with the brake or external of the brake. In one preferred embodiment the flow control is an electrical switch which controls an electrical or mechanical pump so that the pump only operates to pump cooling liquid to the brake when the torque-taking member experiences braking induced torque above a predetermined minimum level.

In another construction the flow control means may comprise a valve in a cooling liquid supply line, the valve allowing the flow of liquid to cool the brake during braking but substantially preventing the flow of liquid when no braking induced torque is applied to the torque-taking member.

Preferably the valve is provided in a cooling liquid supply line between a reservoir of cooling liquid and a pump which the reservoir supplies.

In a brake in which only a small reservoir of cooling liquid is maintained in the housing and the liquid supply line supplies cooling liquid from that reservoir to a pump which pumps the liquid to cool the brake, it is preferred that the valve is provided in the supply line between the reservoir and the pump to isolate the pump from the supply of cooling liquid when no braking induced torque is exerted on the torque-taking member, but allowing fluid to flow to the pump and hence to the braking surfaces when braking induced torque above a predetermined minimum level is applied to the torque-taking member.

In such a brake the valve is preferably provided in a projecting lug provided in a pressure plate of the actuator means and comprises a spring-biased valve member slidable in a bore transverse to the fluid supply line between an isolating position which it occupies when braking is not occurring and in which it obstructs the fluid supply line, and when braking occurs the valve member is adapted to engage a corresponding lug on the housing and is displaced to a displaced position in which it is moved away from a valve seating provided in the supply line to allow fluid communication between the pump and the reservoir. This therefore allows the pump to pump cooling liquid to the braking surfaces.

Preferably the valve member has a body portion which blocks the flow of cooling liquid in the supply line when no braking induced torque is exerted on the pressure plate, and a spigot portion which engages the lug on the housing during braking. The bore in which the valve member is slidable may be a through-bore in the lug on the pressure plate and may be closed at one end by a vented reaction plug, a spring acting between the reaction plug and the valve member to urge the valve member to its isolating position.

The lug on the pressure plate in which the valve is provided may be the torque abutment lug of the pressure plate which engages with a torque, or drag, taking lug of the housing to prevent angular movement of the plate once braking has commenced, or it may be another lug specially provided to mount the flow control means, a corresponding lug being provided on the housing.

The lug in which the flow control means is provided may be immersed in the cooling liquid of the reservoir, or it may be above the level of the liquid in the reservoir. When a valve is provided in a lug of the pressure plate obstructing the cooling liquid supply line between the reservoir and the pump and it is above the level of the reservoir, the valve preferably comprises a spool valve having a body and a sealing flange spaced apart along the axis of the spool valve and working in a bore transverse to the supply line and intersecting the supply line, there being a waist portion between the flange and body of narrower diameter so that an annular space is provided between the waist and the bore, the annular space being brought to register with the supply line in order to connect the reservoir of cooling liquid to the pump.

For simplicity the brake may be provided with flow control means responsive to braking induced torque exerted on the torque-taking member only when the braked wheel is rotating in its normal direction of rotation when the vehicle is travelling forwards. Most braking occurs when travelling forwards and pumping of cooling liquid to cool the brake when braking is thus more desirable when travelling forwards than at other times. In the majority of cases braking when travelling in the reverse direction of travel occurs infrequently and only for a short braking time. The brakes may not heat up too much in such circumstances so pumping cooling liquid may not be necessary. If the rotatable friction braking members dip into the reservoir of cooling liquid there may be even less need for pumped cooling in the reverse direction of travel. However, if the rotatable friction discs are not even partially immersed in the reservoir of cooling liquid, it may be desirable to provide the pumped cooling for both directions of travel. This could be achieved by a second flow control means, or a single flow control means could perform both functions.

A temperature sensitive valve member may be provided in the flow passage. The temperature sensitive valve member may comprise a bi-metallic strip extending radially in a radial portion of the flow passage and secured at one of its ends to a wall of the flow passage with the other of its ends engaging the opposite wall of the flow passage when the strip is cool. The strip may bend when warmer to disengage the opposite wall to allow cooling liquid to flow. The direction in which the other end of the strip moves may be transverse to the direction in which the cooling liquid flows in the flow passage.

Various embodiments of the invention will now be described, by way of example only, with reference to the accompanying drawings of which:-

Figure 1 shows a general plan view of a disc braked in accordance with the invention;

Figure 2 shows a detail of a slightly modified brake similar to that of Figure 1;

Figure 3 shows another modification of the brake of Figure 1;

Figure 4 and 5 show another detail of the brakes of Figures 1 to 3;

Figure 6 shows schematically another embodiment of the invention.

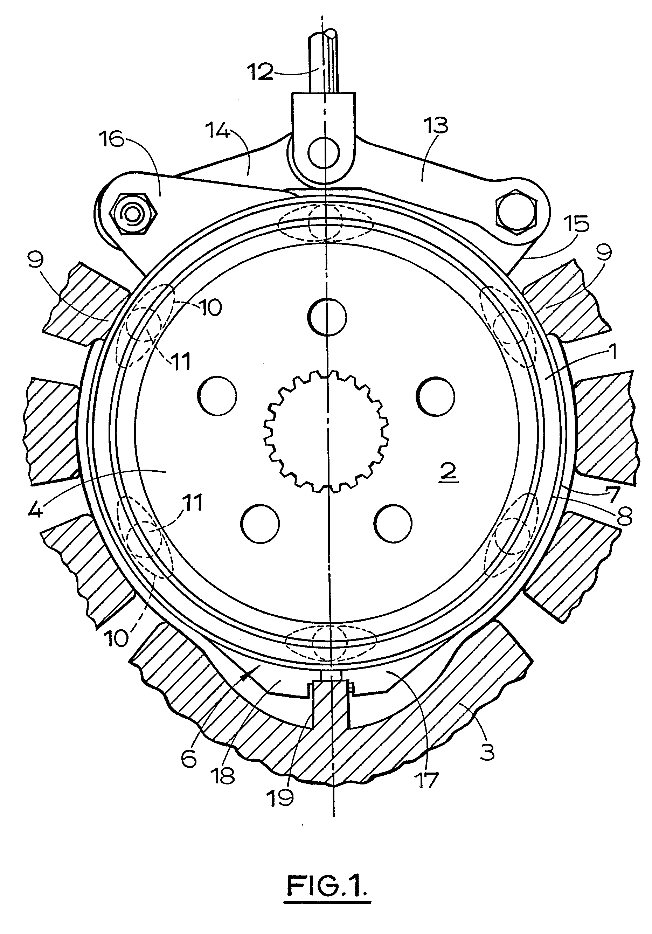

An oil-immersed brake of the multi-plate type is illustrated in Figure 1 of the drawings and comprises sets of relatively stationary and rotatable friction braking members 1 and 2 which are alternatively interposed within a common housing 3 through which cooling oil is circulated. All the braking members 1, 2 comprise annular discs of which the stationary members are keyed to the housing 3 at their outer peripheral edges for relative sliding movement, and the rotatable members 2 are slidably splined to a shaft to be braked. Each member 1 provides a relatively stationary braking surface against which the corresponding adjacent rotatable member 2 may be brought into engagement. Each stationary member 1 comprises a planar steel plate which may be slotted to prevent coning, and each rotatable member 2 comprises a steel plate 4 provided on opposite sides with linings 5.

An actuator assembly 6 is disposed between a pair of adjacent rotatable members 2, for example replacing a stationary plate. The actuator assembly 6 comprises a pair of pressure plates 7, 8 which are centred on pilots 9 in the housing and are provided in adjacent faces with angularly spaced recesses 10 in complementary pairs of which balls 11 are housed.

A pull-rod 12 is coupled to the inner ends of a pair of toggle links 13, 14 of which the outer ends are coupled to respective radial lugs 15, 16 on the two pressure plates 7 and 8.

The application of the brake is initiated by the pull-rod 12 which withdraws the toggle links 13, 14 to move the pressure plates 7, 8 angularly in the housing 3 in opposite directions. This causes the pressure plates 7 and 8 to separate axially by the balls 11 running up ramps defined by the bases of the recesses 10. This tends to clamp the two sets of friction members 1, 2 together, and the engagement of the pressure plates 7, 8 with the rotatable members 2 causes the two pressure plates 7, 8 to be carried round initially with the members 2 until the movement of one of them is arrested by a stop abutment in the housing 3, suitably defined by the engagement with a torque-abutment lug 17, 18 on that plate with a respective torque, or drag taking lug 19. The lug 19 is in this case also a pilot 9. During braking there is a force between the torque abutment lug of the arrested plate and the torque-taking lug on the housing which counteracts the torque produced on the arrested plate by the slipping of the adjacent and engaged friction member past the stationary surface of the arrested pressure plate. The other plate continues to be carried round with a servo or self-energising action which increases the separation of the pressure plates 7, 8 to enhance the braking.

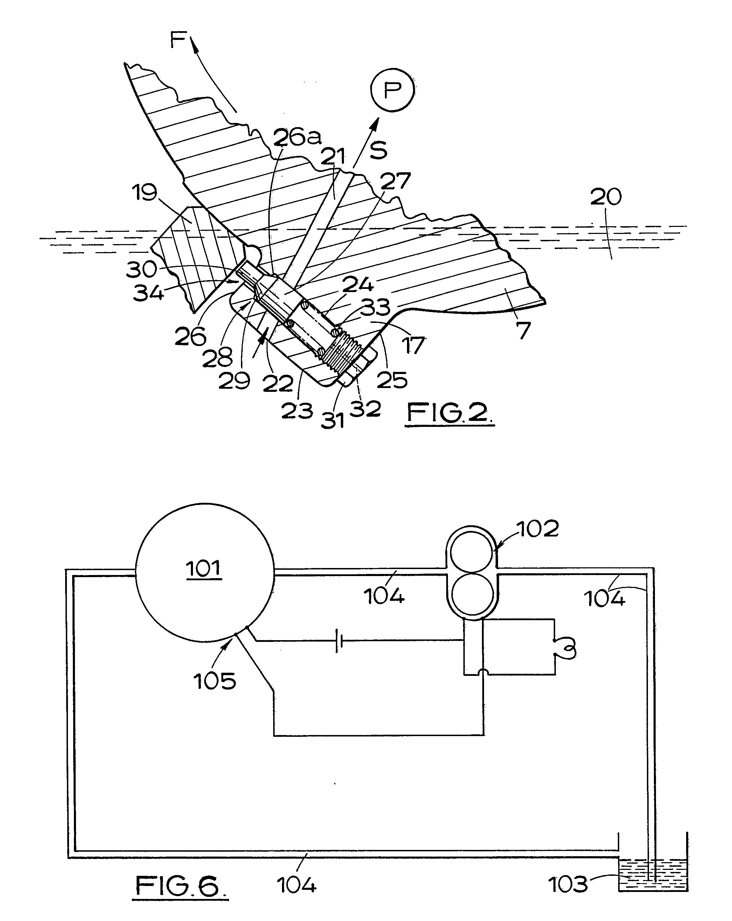

In the modification of Figure 2, the torque taking lug 17 of the housing is offset from the 6 o'clock position and the pressure plates and friction discs are partially immersed in a reservoir 20 of cooling liquid which is defined by the housing 3. The lug 19 is both a pilot lug and the drag-taking torque abutment lug of the housing, and the lug 17 of the pressure plate 7 is the torque abutment of that plate. The lug 19 is almost completely immersed in the reservoir of cooling liquid.

A flow passage 21 is provided in the pressure plate 7 extending from the reservoir 20 to a pump P integral with the brake. The pump P pumps cooling liquid to the brake. A suitable pump is that shown in our co-pending Patent Application No. 8717876.

The flow passage 21 comprises a bore in the plate 7 leading from an opening 22 in the circumferential surface 23 of the lug 17 to an inlet for pump P. A through bore 24 extends transversely of the passage 21 from one radial face 25 of the lug 17 to the other radial face 26. The bore 24 is inwardly stepped towards its end 26a which opens out at the radial face 26 adjacent the lug 19. The step is frusto-conically chamfered, with the cone having a large included cone angle, and forms a valve seating for a valve member 27. The valve member 27 is part of a pump-isolating valve 28 which is operable to communicate the pump P with its supply of cooling fluid from the reservoir 20 or to isolate the pump from the reservoir, according to whether the brake is actuated or not.

The valve member 27 is held in the transverse bore 24 and comprises a cylindrical body. One end of the body has a frusto-conical chamfered region 29 from which a spigot 30 extends. The end of the transverse bore 24 ,which opens to the radial face 26 of the lug 17 is screw-threaded and is closed off by a bolt 31. The bolt 31 is provided with a vent 32. A spring 33 is located between the body of the valve member and the bolt 31 and urges the valve member towards the stepped end of the bore 24. The bolt 31 provides a reaction surface for the spring 33. The diameter of the spigot 30 is smaller than that of the inwardly stepped end of the bore 24.

When the vehicle is not being braked the valve member is held in the position shown in Figure 2 by the spring 33. In this non-braking condition the body of the valve member obstructs annular fluid path 34 which surrounds the spigot 30, and also obstructs the passage 21. The pump P is isolated from the reservoir 20 so that the pump suction (indicated by arrow S) cannot draw a significant amount of cooling fluid past the valve member 27 when the brake is not braking. The valve member may completely isolate the part of the passage 21 radially inwards of the valve member from the annular passage 34 and the opening 22 of the passage, or it may allow a small amount of leakage.

When the vehicle is braked when it is travelling in its forward direction of travel the friction members are rotating in the direction of arrow F of Figure 2 and the face 26 of torque abutment lug 17 engages the lug 19 of the housing to arrest the angular movement of the plate 7. During the initial moments of braking the spigot 30 contacts the lug 19. The torque on the pressure plate produced by braking overcomes the force of the spring 33 and the valve member is caused to be pushed into the bore 24 as the lug 17 of plate 7 moves into engagement with lug 19 (the spigot of course remains in contact with the lug 19). This opens the flow channels through the annular passage 34 and connects the end 22 of the flow passage 21 to the main part of the flow passage. This allows cooling liquid to enter the inlet of the pump whereafter it is pumped to cool the braking faces of the brake. The vent 32 allows the fluid in the space between the body of the valve and the bolt 31 to escape as that space is compressed.

When the vehicle is travelling in its reverse direction the lug 17 is not urged towards the lug 19 and the valve member 27 does not move relative to the bore 24. No cooling liquid therefore flows to the pump.

A second valve member may be provided to allow the free flow of cooling liquid to the pump in the reverse direction of travel. The second valve member could be provided in the same lug 17 as the first valve member, or in another lug on the plate 7. The first and second valve members could be combined into a single valve, and may comprise a single member.

When the brake is not applied, and when the vehicle is not travelling forwards, the pump is isolated from the supply of cooling liquid in the reservoir. It is connected to that supply due to the torque induced on the pressure plates by braking when travelling in the forwards direction.

When the direction in which the pump pumps depends upon the direction of rotation of the axle to be braked (for example if the pump is integral with the brake) it is preferred to isolate the pump from the reservoir of cooling liquid. This avoids the pump sucking air and blowing it into the cooling liquid, foaming the cooling liquid.

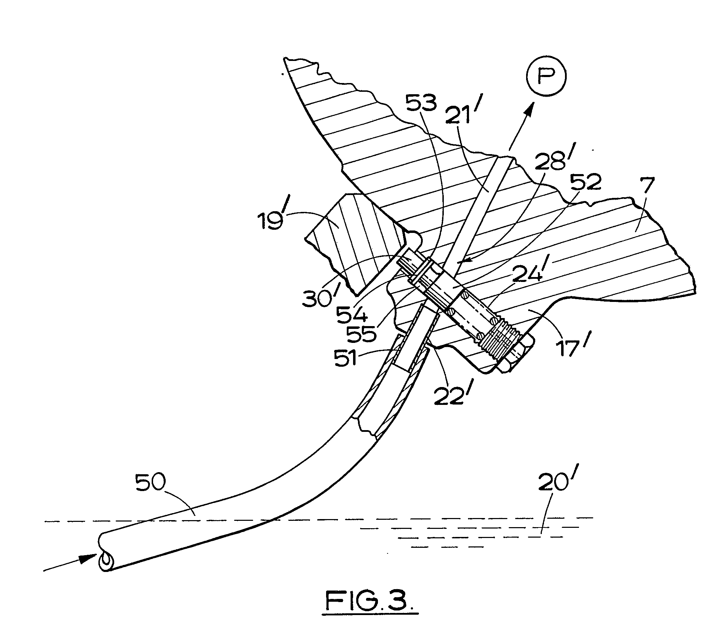

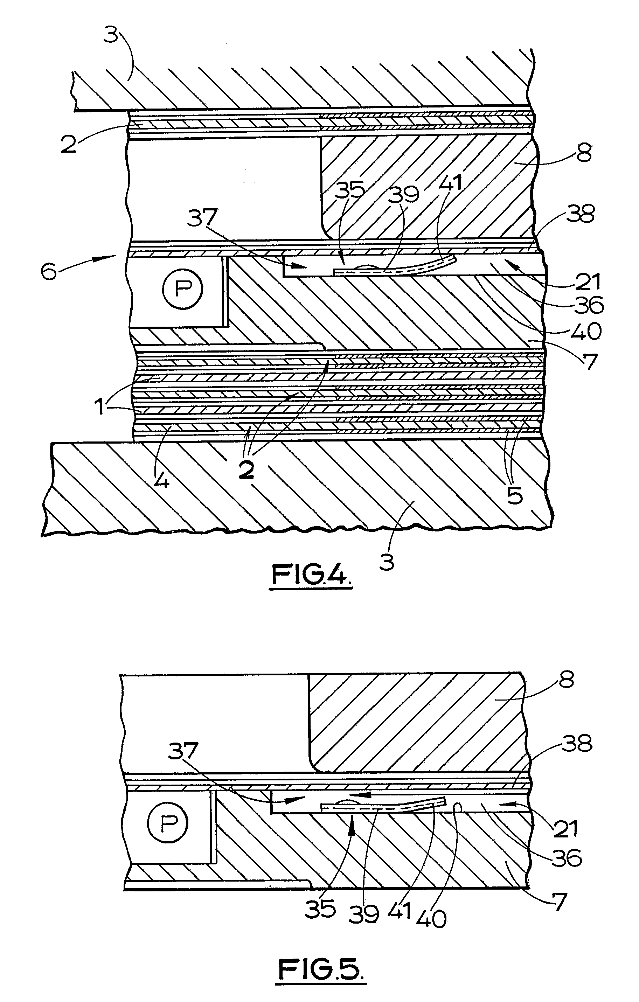

The brakes of Figures 1 and 2 (and for that matter the brake of Figure 3) has also a temperature sensitive valve member provided in the flow passage 21 radially inwards of the pump isolation valve 28. This is shown in Figures 4 and 5.

The temperature sensitive valve member 35 is provided in a portion 36 the flow passage that extends radially in the pressure plate 7 and which provides communication from the part of flow passage 21 shown in Figures 2 and 3 to the pump P.

The portion 36 of the flow passage 21 is part defined by a channel section groove 37 extending in the pressure plate 7 and part-defined by a cover plate 38 attached to the plate 7 to close off the radially extending side of the groove 37 which would otherwise be open.

The valve 35 comprises a bi-metallic strip 39 located in the portion 36 of the flow passage, obstructing the passage when it is cool and opening the passage when it is warmer. The bi-metallic strip 39 has an elongate length and extends radially in the passage 21. The strip 39 is secured at its radially inner end to the floor wall 40 of the groove 37 by a screw, bolt, rivet, or any other suitable means. The radially outer end 41 of the strip 39 bears on the cover plate 38 when the strip is cool, the strip being curved in an axial direction.

When the strip is cool it obstructs the passage 21 preventing the pump drawing cooling liquid from the reservoir 20. However, during braking the pressure plates heat up due to the friction produced. When this heat affects the bi-metallic strip it bends to open the flow passage, allowing the pump to pump cooling liquid.

It will be noted that the end 41 of the strip moves in a direction transverse to the direction of flow of the cooling liquid. If the pump applies suction to the passage before the strip has moved away from the cover plate this will merely force the strip further into engagement with the closure plate. The strip may carry a resilient sealing element to improve its sealing of the flow passage.

Although the temperature sensitive valve 35 is described as being used in combination with the torque-sensitive valve 28, either could be used alone. The feature of the temperature-sensitive valve is the subject of a co-pending patent Application of the same date as this Application.

Figure 3 shows a detail of a brake in many ways similar to that of Figure 2, except that it is a brake in which the pressure plates are not partially immersed in cooling liquid. Similar reference numerals have been given to similar parts.

When the brake of Figure 3 is in a non-braking condition the pump P is isolated from the supply of cooling liquid by a pump-isolating valve. The lugs 17' and 19' are above the level of the reservoir 20' and so a pipe 50 extends from adjacent the end 22' of the passage 21' into the cooling liquid of the reservoir. A hollow connecting piece 51 is received in the end of the passage 21' and connects the pipe 50 to the end 22'.

The valve member 28' comprises a cylindrical spool having a body 52 and a projecting spigot 30' which extends from the body through an inwardly stepped end 53 of a through bore 24' in lug 17'. The spigot 30' carries a sealing flange 54 at a region intermediate in its length. The flange 54 and the body 52 are of substantially the same diameter as the wider portion of the bore 24'. An annular space 55 is defined between the region of the spigot which is between the flange 54 and the body 52 and the transverse bore 24'.

The valve of Figure 3 operates in a similar manner to that of Figure 2. The torque produced at the pressure plate 7' during braking in the forward direction of movement of the vehicle causes the valve member to be moved relative to the bore 24' to register the annular space 55 with the passage 21' so that the pump P is connected to the supply of cooling liquid. The flange 54 and body 52 prevent undue loss of cooling liquid past them into the bore 24', although some leakage may be permissible.

When the pressure plates are not at least partially immersed in cooling liquid, it is preferred to provide a similar pump-isolating valve for the reverse direction of movement of the vehicle.

It will be appreciated that the valve arrangements of Figures 1 to 5 are applicable to servo and non-servo brakes.

The lug 19 or 19' on the housing need not necessarily be a pilot lug, nor need it be a torque abutment lug of the housing. Similarly, the lug 17 or 17' need not be a pilot lug or the torque abutment lug of the pressure plate. All that is required is that the torque produced at the pressure plate during braking produce a large enough force between the valve member and a surface of the housing to cause the flow passage to be opened.

In a further modification of the torque-sensitive valves shown in Figures 2 and 3, the torque on the pressure plate produced during braking causes an electrical connection to be made (or broken) and the valve member is controlled electrically, for example by a solenoid.

In a further modification the pump-isolating valve is not provided in a pressure plate but in a relatively stationary braking member, which engages a rotatable friction braking member during braking. The relatively stationary braking member experiences torque produced by braking and so can be considered equivalent in this respect to the pressure plates described.

The pump P could be applying suction to the radially inner part of the flow passage all of the time, or it could only be activated during braking. It could be integral with the brake or remote from the brake.

Figure 6 shows schematically a brake having a pump system that is controlled by the torque force on the pressure plates produced by braking.

A brake 101, pump 102 and reservoir of cooling liquid 103 are connected by liquid supply lines 104. The pump 102 is an electric pump the operation of which is controlled by a switch 105 provided at the brake.

The switch 105 is mounted either in a lug equivalent to lug 19 on the brake housing or a corresponding lug equivalent to lug 17 on the pressure plate and requires a force greater than a predetermined minimum engagement force to be exerted between the lug on the housing and the lug on the plate before it will close to operate the pump 102. The construction of such a switch will be immediately apparent such that the necessary engagement force is provided by the torque abutment engagement force produced on the pressure plate during braking.

The pump system of Figure 6 will only pump cooling liquid to the braking faces of the brake when braking actually occurs. Thus, there may be no necessity for the valve members shown in the constructions of Figures 2-5 to isolate the pump from its supply of cooling liquid when the brake is not being actuated.

The pump system of Figure 6 could be used with similar constructions to those of Figures 1 to 5, but with no valve members, or alternatively it could be used in conjunction with the structures of Figures 1 to 5 including any or all of the valves described.

The pump 102 could be a mechanical pump controlled electrically.

## Claims

1. A disc brake of the liquid cooled type comprising a first braking surface provided on a rotatable friction braking member (2) rotatable in a housing (3) and slidably keyed to a shaft to be braked, a torque-taking member (7) having a second braking surface provided in the housing (3), actuator means (7,8,12,13,14) for bringing the first and second braking surfaces into frictional engagement to apply the brake, means for supplying cooling liquid (21,22,P) to the braking surfaces to cool the braking surfaces, torque being applied to the second braking surface by the first braking surface during braking due to relative rotation of the first and second braking surfaces, and flow control means (28;28') is provided to control the supply of cooling liquid to the brake, characterised in that a control portion (30;30') of the flow control means (28;28',105) is responsive to a circumferential torque-induced force generated between the torque-taking member (7) and a torque abutment (19;19') provided in the housing (3), the control portion being urged relative to the torque abutment during braking by torque applied to the second braking surface by the first braking surface, and the flow control means (28;28') being arranged such that the supply of cooling liquid to the braking surfaces is significantly greater when braking generated torque is exerted on the torque-taking member (7) than when no such braking generated torque is present.

2. A disc brake according to claim 1, characterised in that a lug (17;17') is provided projecting from the torque-taking member, and the torque abutment comprises a complementary lug (19;19') provided in the housing (3), the flow control means (28;28') being provided in one of the lugs (17;17' or 19;19') and being responsive to relative angular movement between the lugs induced by braking generated torque on the torque-taking member (7).

3. A disc brake according to claim 1 or claim 2, characterised in that the brake further comprises a third braking surface provided on the opposite axially spaced side of the rotatable friction member (2) to the first braking surface, and a fourth relatively stationary braking surface provided in the housing (3), and the actuator means comprises an axially movable pressure plate (7) which constitutes said torque-taking member and which is adapted to urge the friction member (2) into engagement with the fourth braking surface to brake the shaft.

4. A disc brake according to any preceding claim, characterised in that the brake is provided with a series of axially spaced rotatable friction discs (2), each with a braking surface on each of its faces, and an interleaved series of stationary members (1) against which the friction discs are adapted to be urged to brake the shaft.

5. A disc brake according to any preceding claim, characterised in that the flow control means (28;28',105) comprises a valve (28;28') in a cooling liquid supply line (21;21'), the valve allowing the flow of liquid to cool the brake during braking but substantially preventing the flow of liquid when no braking induced torque is applied to the torque-taking member (7).

6. A disc brake according to claim 5, characterised in that the valve (28;28') is provided in the supply line (21;21') between a reservoir of cooling liquid (20) and a pump (P) which the reservoir supplies, the valve isolating the pump from the supply of cooling liquid when no braking induced torque is exerted on the torque-taking member (7), but allowing fluid to flow to the pump (P), and hence to the brake, when braking induced torque above a predetermined minimum level is applied to the torque-taking member.

7. A disc brake according to claim 5 or claim 6, characterised in that the valve (28;28') is provided in a projecting lug (17;17') provided on a pressure plate (7) of the actuator means and comprises a spring-biased valve member (27) slidable in a bore (24;24') transverse to the fluid supply line (21;21') and having an isolating position which it occupies when braking is not occurring and in which it obstructs the fluid supply line (21;21'), the valve member being adapted to engage a corresponding lug (19;19') on the housing when braking occurs and is displaced to a displaced position in which it is moved away from a valve seating (26a;53) provided in the supply line to allow fluid communication between the pump (P) and the reservoir (20).

8. A disc brake according to claim 7, characterised in that the lug (17;17') on the pressure plate (7) in which the valve (28;28') is provided engages with the torque abutment lug (19;19') of the housing (3), and the engagement of the lug (17;17') on the pressure plate and the torque abutment lug (19;19') prevents angular movement of the plate (7) once braking has commenced.

9. A disc brake according to any preceding claim, characterised in that the flow control means (28;28',105) is provided in a lug (17;17') projecting from the torque-taking member (7) and is immersed in a reservoir (20) of cooling liquid.

10. A disc brake according to any preceding claim, characterised in that the flow control means (28;28',105) comprises an electrical switch (105) provided in a lug (17;17') of the torque-taking member or a corresponding lug (19;19') of the housing (3), the switch (105) controlling the operation of a pump (102) provided to pump cooling liquid to cool the brake.

11. A disc brake according to any preceding claim, characterised in that the flow control means (28;28',105) controls a pump (102) such that the pump only operates to pump cooling liquid to the brake when the torque-taking member experiences braking induced torque above a predetermined minimum level.

12. A pressure plate (7) for a disc brake of the liquid cooled type adapted to bear against a rotatable friction braking member (2) which is provided in a housing (3) of the brake and keyed to a shaft to be braked, the pressure plate (7) being characterised in that it has a radially projecting lug (17;17') provided with flow control means (18;18',105) that is adapted to be urged towards a corresponding lug (19;19') in the housing, the flow control means (18;18',105) being responsive to circumferential torque-induced force between the control means and said corresponding lug (19;19') and being adapted to control the supply of cooling liquid to the brake such that the supply is significantly greater when braking generated torque is applied to the pressure plate (7) than when no such braking generated torque is present.

FIG.1.

FIG.2.

FIG.6.

FIG.3.

**FIG.4.**

**FIG.5.**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 061 533 (A. WELTE)  * Page 7, line 12 - page 10, line 9; figures 1-4 * | 1,3,4 | F 16 D 65/853  F 16 D 55/14 |
| A | GB-A-1 502 608 (GIRLING LTD)  * Whole document * | 1,3,4 | |
| A | WO-A-8 705 084 (ZAHNRADFABRIK FRIEDRICHSHAFEN AG)  * Page 5, line 26 - page 7, line 15; figure * | 1 | |
| A,D | EP-A-0 143 898 (ZAHNRADFABRIK FRIEDRICHSHAFEN AG)  * Page 5, line 4 - page 7, line 5; figures 1-3 * | 1 | |
| A,D | US-A-3 071 210 (C.C. WRIGLEY et al.)  * Whole document * | 1 | |
| A | GB-A-2 087 998 (MASSEY-FERGUSON SERVICES NV)  * Whole document * | 1,3,4 | TECHNICAL FIELDS SEARCHED (Int. Cl.4) |
| A | GB-A- 739 244 (THE S.K. WELLMAN CO.)  * Page 3, lines 27-129; figures 1,2,6,7 * | 1,10 | F 16 D 65/00  F 16 D 55/00  F 16 D 25/00  F 16 D 13/00 |

The present search report has been drawn up for all claims

| Place of search | Date of completion of the search | Examiner |
|---|---|---|
| THE HAGUE | 02-02-1989 | BRAEMS C.G.I. |